# EUROPEAN PATENT SPECIFICATION

(11) **EP 4 139 171 B1**
(45) Date of publication and mention of the grant of the patent: **12.02.2025**
(21) Application number: 21720591.3
(22) Date of filing: 19.04.2021
(51) Int. Cl.: B60R 21/203, B62D 1/183, B62D 1/19

(54) **A VEHICLE COMPRISING A STEERING WHEEL ASSEMBLY AND AN AIRBAG ASSEMBLY**
EIN FAHRZEUG MIT EINER LENKRADANORDNUNG UND EINER AIRBAGANORDNUNG
UN VÉHICULE COMPRENANT UN ENSEMBLE VOLANT ET UN ENSEMBLE AIRBAG

(30) Priority: 22.04.2020 NL 2025398
(43) Date of publication of application: 01.03.2023
(73) Proprietor: DAF Trucks N.V., 5643 TW Eindhoven (NL)
(72) Inventor: PIERIK, Gerardus Lambertus Hendrikus, 5643 TW Eindhoven (NL)
(74) Representative: V.O.
(86) International application number: PCT/NL2021/050248
(87) International publication number: WO 2021/215911

(56) References cited:
- JP-A- 2007 276 716
- JP-A- H 058 737
- US-A1- 2017 174 171

## Description

The invention relates to a vehicle, in particular a heavy goods vehicle with an engine over cab design, the vehicle comprising a steering wheel assembly and an airbag assembly, the steering wheel assembly comprising a steering wheel column for mounting a steering wheel on top of the steering wheel column and a steering wheel column connection unit connecting the steering wheel column to a frame, wherein the steering wheel column connection unit is arranged for pivotally mounting the steering wheel column around a pivot axis, the steering wheel column connection unit comprising steering wheel column connection means for adjustably connecting the steering wheel column to the frame in a position in a range between a most forward position and a most rearward position, as seen in a normal driving direction of the vehicle, the air bag assembly comprising an airbag and an electronic airbag control unit.

From DE102018007080A1 a steering device is known for a vehicle that can be driven at least in partially autonomous driving operation, which steering device comprises a steering wheel mounted on a steering wheel column, a steering wheel support and an airbag device with an airbag cushion and a gas generator. The steering wheel support is pivotally mounted in the direction of the longitudinal axis of the vehicle from a single position for conventional driving of the vehicle by a driver to a defined stowage position in which the steering wheel column is positioned substantially vertical when the vehicle is driven in partially autonomous mode, and vice versa. The steering wheel support has a recess below the steering wheel in which recess the airbag device is arranged. The gas generator is designed to act with a gas upon the airbag cushion and is arranged in such a way that in case of a collision the gas generator is triggered such that the steering wheel support automatically swivels into the stowage position. Although such a steering device and airbag device can provide satisfactory safety for passenger vehicles which can be driven in partially autonomous mode such a steering device does not provide sufficient driver safety in all situations when used in heavy goods vehicle in particular heavy goods vehicles with an engine over cab design. Such heavy goods vehicles with a cab over engine design do not have a bonnet or long crumple zone which in event of a frontal crash results in very high impact deceleration pulses and large deformation of the interior. The steering device as described in DE102018007080A1 only provides a single (manual) driving position and a single stowage position of the steering column which is not suitable for heavy goods vehicles as the seating position in such heavy goods vehicles the seating position is usually up right and as a consequence of ergonomic requirements the steering wheel column needs to have a very large adjustment range, and due to the usually relatively large size of the steering wheel a so-called 'easy entry' steering wheel adjustment position, a most forward position is desired. As a consequence of these requirements the relatively large and heavy steering wheel column of a heavy goods vehicle will tend to pivot upward around the Y-axis of the heavy goods vehicle (i.e. the axis perpendicular to the normal driving direction of the heavy goods vehicle and parallel to a surface on which the heavy goods vehicle travels) in case of a severe frontal crash impact. In such crash conditions the driver can hit the rim of the steering wheel hard resulting in severe or fatal injury in the chest region. Often the driver is trapped between dashboard, steering wheel and seat. This may further increase the injuries to the driver. Although according to DE102018007080A1 in case of a collision the gas generator is triggered such that the steering wheel support automatically swivels into the stowage position, i.e. away from the driver, the gas generator appears not to be fast enough to swivel the steering wheel column into the stowage position during all kinds of frontal impact. In particular in heavy goods vehicles the large adjustment range of a steering wheel column leads to the disadvantage that the initial steering wheel position has a large influence on the crash behavior and effectiveness of the airbag. There thus is a desire in the field of vehicles, in particular a heavy goods vehicle with an engine over cab design, for a steering wheel assembly and an airbag assembly, which provide a crash performance of the steering wheel column which is less sensitive to the initial steering wheel adjustment and thus provide improved driver safety, in particular which minimize the likelihood of the driver being trapped between the steering wheel and driver seat. In document JP H05 8737 A, a vehicle with a steering wheel assembly according to the preamble of claim 1 is disclosed.

According to the invention this desire in the field is met by providing a vehicle, in particular a heavy goods vehicle with an engine over cab design, the vehicle comprising a steering wheel assembly and an airbag assembly, the steering wheel assembly comprising a steering wheel column for mounting a steering wheel on top of the steering wheel column and a steering wheel column connection unit connecting the steering wheel column to a frame, wherein the steering wheel column connection unit is arranged for pivotally mounting the steering wheel column around a pivot axis, the steering wheel column connection unit comprising steering wheel column connection means for adjustably connecting the steering wheel column to the frame in a position between a most forward position and a most rearward position, as seen in a normal driving direction of the vehicle, the air bag assembly comprising an airbag and an electronic airbag control unit, characterized in that the steering wheel column connection means are arranged for automatically positioning the steering wheel column in the most forward position in case of a front collision of the vehicle without any external triggering other than the kinetic energy of the mass of the steering wheel column and the closing speed of the collision and in that the airbag assembly comprises a curved shaped airbag mounted on the steering wheel column at a side thereof directed downwards. The invention is based on the insight that the reaction force as a result of the mass of the steering wheel column and the closing speed of the collision is sufficient for automatically positioning the steering wheel column in the most forward position. This reaction force is, in contract to he reaction time of e.g. a gas generator, immediately available and sufficient to position the steering wheel column in the most forward position within the requested time span.

In an embodiment of a vehicle according to the invention the center of gravity of the steering wheel column is positioned above the pivot axis. In case the center of gravity of the steering wheel column is positioned above the pivot axis positioning of the steering wheel column in the most forward position is facilitated during a frontal crash of the vehicle in that the steering wheel column will be rotated upward due to the center of gravity of the steering. In this manner it is possible to provide a cost effective steering wheel assembly column. At lower collision impact speeds, the decelerations will still be sufficient for the upward rotation of the steering wheel column to avoid hard contact of the driver with the steering wheel. However, at lower impact speeds the electronic airbag control unit shall not trigger the airbag. At higher closing speeds the airbag will be triggered by the electronic airbag control unit.

In a further embodiment of a vehicle according to the invention the steering wheel column connection means comprises a clamping mechanism for the steering wheel column. In case a clamping mechanism for the steering wheel column is used it is in a relatively simple mechanical manner possible to on the one hand provide sufficient clamping force connecting the steering wheel column to the frame for normal use, such as driving the vehicle, or ingress or egress by the driver where the steering column is used as support (e.g. driver is hanging on the steering wheel), while on the other hand the forces that act on the clamping mechanism during a frontal crash overcome the clamping force of the clamping mechanism such that the steering wheel column is almost instantly positioned in the most forward position.

In a further embodiment of a vehicle according to the invention the curved shaped airbag is configured to deploy toward the thorax and head region of a driver of the vehicle, preferably the curved shaped airbag comprises at least three chambers, a first chamber configured to be deployed between the steering wheel column and a rim of the steering wheel, a second chamber configured to be deployed over the rim of the steering wheel and a third chamber configured to be deployed over the steering wheel. In particular the curved shaped airbag comprises external tethers between the chambers. In this manner the curved shaped airbag when deployed provides sufficient safety for the entire upper body of the driver is in contact with the airbag. Additionally the curved shaped airbag comprises a fourth chamber, the fourth chamber being configured to be deployed toward the knees of a driver. Due to this design of the curved shaped airbag the airbag can be made non-symmetrical, as the actual rotational angle of the steering wheel column is not of any influence to the deployment of the airbag. Due to the non-symmetrical design of the curved shaped airbag the restraint performance of the curved shaped airbag can be improved for near frontal impacts, e.g. the curved shaped airbag can be made wider than usual and/or the chance of the driver's head hitting a dash panel outside of the airbag is reduced. In particular, the curved shaped airbag can be provided with a volume of about 90 dm³.

The invention will be further explained with reference to the Figures, in which a non-limiting exemplary embodiment of according to the invention is shown:
Fig. 1 schematically shows an embodiment in side view of a driver's cabin of a vehicle according to the invention;
Fig. 2 schematically shows a steering wheel assembly with a steering wheel column for a steering wheel and a steering wheel connection unit for connecting the steering wheel column to a frame of the driver's cabin as shown in Figure 1 in side view in which the steering wheel column is positioned in the most forward position;
Fig. 3 schematically shows the steering wheel assembly of Figure 2 in side view in which the steering wheel column is positioned in the most rearward position; and
Figs. 4A to 4D schematically show the deployment of the curved shaped airbag of the airbag assembly of an embodiment of a vehicle according to the invention.

### DETAILED DESCRIPTION OF THE PREFERRED EMBODIMENTS

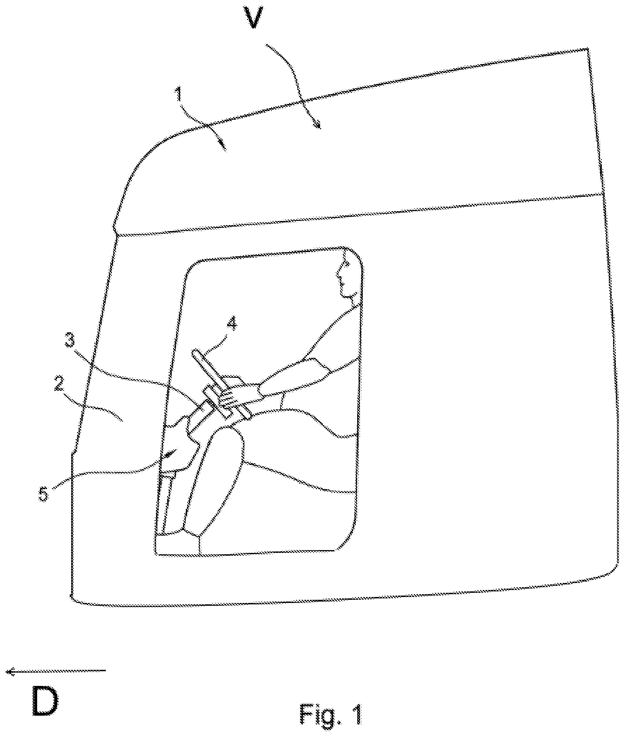

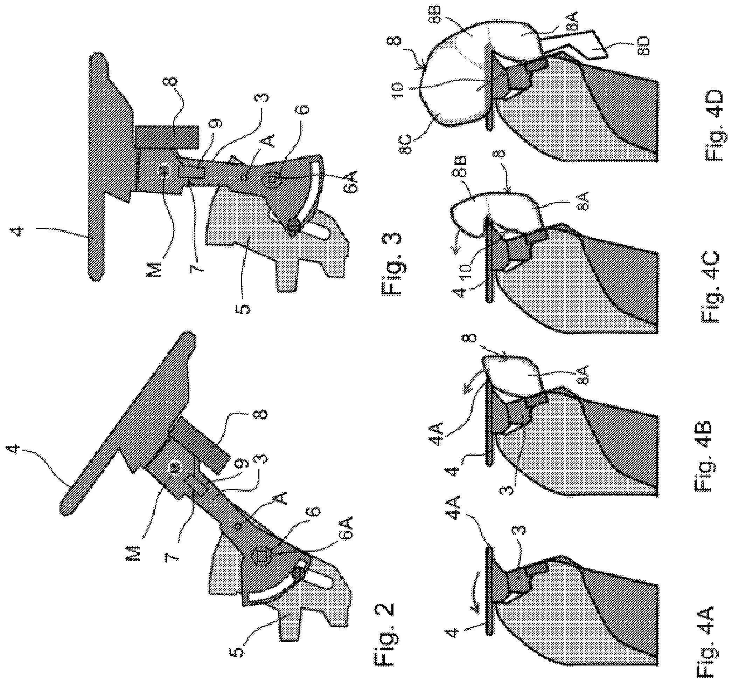

In Fig. 1 an example of an embodiment of a driver's cabin 1 of a heavy goods vehicle V with an engine over cab design according to the invention is shown in side view. The driver's cabin 1 comprises a cabin frame 2. The heavy goods vehicle V comprises a steering wheel assembly comprising a steering wheel column 3 for a steering wheel 4 on top of the steering wheel column 3 and a steering wheel column connection unit 5 for connecting the steering wheel column 3 to the cabin frame 2. The steering wheel column connection unit 5 is arranged for pivotally mounting the steering wheel column 3 around a pivot axis A to the cabin frame 2. The steering wheel column connection unit 5 comprising steering wheel column connection means 6 for adjustably connecting the steering wheel column 3 to the frame in a position between a most forward position, for both easy entry and as the final position in case of a severe frontal impact entry (as shown in Figure 3) and a most rearward position (as shown in Figure 2), as seen in a normal driving direction D of the heavy goods vehicle V.

The heavy goods vehicle V further comprises an air bag assembly 7 comprising an airbag 8 and an electronic airbag control unit 9. The airbag 8 is a curved shaped airbag 8 mounted on the steering wheel column 3 at a side thereof directed downwards. As is in particular clearly shown in Figures 2 to 4, the airbag 8 is arranged underneath the steering wheel 4.

According to the invention the steering wheel column connection means 6 are arranged for automatically positioning the steering wheel column 3 in the most forward position in case of a front collision of the vehicle without any external triggering other than the kinetic energy of the mass of the steering wheel column 3 and the closing speed of the collision. The steering wheel column connection means 6 comprises a clamping mechanism 6A for the steering wheel column 3. Such a clamping mechanism 6A is known per se and is not described here in detail.

The center of gravity M of the steering wheel column 3 is positioned above the pivot axis A to facilitate positioning of the steering wheel column 3 in the most forward position during a frontal crash of the vehicle V in that the steering wheel column 3 will be rotated upward.

The deployment of the curved shaped airbag 8 is described with reference to Figures 4A to 4D.

The clamping mechanism 6A is configured such that it on the one hand provides sufficient clamping force connecting the steering wheel column 3 to the frame 2 for normal use while on the other hand the forces that act on the clamping mechanism 6A during a frontal crash overcome the clamping force of the clamping mechanism 6A such that the steering wheel column 3 is almost instantly positioned in the most forward position as indicated in Figure 4A. Even at lower collision impact speeds the decelerations will still be sufficient for the upward rotation of the steering wheel column 3 to avoid hard contact of the driver with the steering wheel 4. However, at lower impact speeds the electronic airbag control unit shall not trigger the airbag 8. At higher closing speeds the airbag 8 will be triggered by the electronic airbag control unit 9.

As indicated in Figure 4 the curved shaped airbag 8 comprises at least three chambers 8A, 8B, 8C. A first chamber 8A is configured to be deployed first between the steering wheel column 3 and a rim 4A of the steering wheel 4. A second chamber 8B is configured to be deployed next over the rim 4A of the steering wheel 4 and a third chamber 8C is configured to be deployed thereafter over the steering wheel 4. The deployment of the curve shaped airbag 8 is activated under control of the electronic airbag control unit 9. In an embodiment the first chamber 8A starts deploying within 20 ms after collision impact and completely filling the first chamber 8A occurs within 100 ms after collision impact. The second chamber 8B starts deployment within 35 ms after collision impact and completely filling the second chamber 8B takes 95 ms. The third chamber 8C starts deployment within 45 ms after collision impact and is completely filled within 90 ms. The curved shaped airbag 8 comprises external tethers 10 between the chambers 8A, 8B, 8C so that the curved shaped airbag 8 is configured to deploy toward the thorax and head region of a driver of the vehicle. In the shown embodiment the three chambers 8A, 8B, 8C of the curved shaped airbag 8 have a volume of about 90 dm³.

As indicated in Figure 4D the curved shaped airbag 8 comprises a fourth chamber 8D configured to be deployed toward the knees of a driver.

## Claims

1. A vehicle (V), in particular a heavy goods vehicle with an engine over cab design, the vehicle (V) comprising a steering wheel assembly and an airbag assembly, the steering wheel assembly comprising a steering wheel column (3) for mounting a steering wheel (4) on top of the steering wheel column (3) and a steering wheel column connection unit (5) connecting the steering wheel column (3) to a frame (2), wherein the steering wheel column connection unit (5) is arranged for pivotally mounting the steering wheel column (3) around a pivot axis (A), the steering wheel column connection unit (5) comprising steering wheel column connection means (6) for adjustably connecting the steering wheel column (3) to the frame (2) in a position in a range between a most forward position and a most rearward position, as seen in a normal driving direction (D) of the vehicle (V), the air bag assembly comprising an airbag (8) and an electronic airbag control unit (9), **characterized in that** the steering wheel column connection means (6) are arranged for automatically positioning the steering wheel column (3) in the most forward position in case of a front collision of the vehicle (V) without any external triggering other than the kinetic energy of the mass of the steering wheel column (3) and the closing speed of the collision and **in that** the airbag assembly comprises a curved shaped airbag (8) mounted on the steering wheel column (3) at a side thereof directed downwards.

2. A vehicle (V) as claimed in claim 1, **characterized in that** the center of gravity of the steering wheel column (3) is positioned above the pivot axis (A).

3. A vehicle (V) as claimed in claim 1 or 2, **characterized in that** the steering wheel column connection means (6) comprises a clamping mechanism (6A) for the steering wheel column (3).

4. A vehicle (V) as claimed in claim 1, 2 or 3, **characterized in that** the curved shaped airbag (8) is configured to deploy toward the thorax and head region of a driver of the vehicle (V).

5. A vehicle (V) as claimed in claim 4, **characterized in that** the curved shaped airbag (8) comprises at least three chambers (8A, 8B, 8C), a first chamber (8A) configured to be deployed between the steering wheel column (3) and a rim (4A) of the steering wheel (4), a second chamber (8B) configured to be deployed over the rim (4A) of the steering wheel (4) and a third chamber (8C) configured to be deployed over the steering wheel (4).

6. A vehicle (V) as claimed in claim 5, **characterized in that** the curved shaped airbag (8) comprises external tethers (10) between the chambers (8A, 8B, 8C).

7. A vehicle (V) as claimed in claim 5 or 6, **characterized in that** the curved shaped airbag (8) comprises a fourth chamber (8D), the fourth chamber (8D) being configured to be deployed toward the knees of a driver.

8. A vehicle (V) as claimed in any one of the preceding claims, **characterized in that** the curved shaped airbag (8) has a volume of about 90 dm³.

## Patentansprüche

1. Fahrzeug (V), insbesondere ein Schwerlastfahrzeug in Motor-über-Fahrerhaus-Bauweise, das Fahrzeug (V) umfassend eine Lenkradbaugruppe und eine Airbagbaugruppe, wobei die Lenkradbaugruppe eine Lenkradsäule (3) zur Befestigung eines Lenkrads (4) auf der Lenkradsäule (3) und eine Lenkradsäulenverbindungseinheit (5) umfasst, die die Lenkradsäule (3) mit einem Rahmen (2) verbindet, wobei die Lenkradsäulenverbindungseinheit (5) zur schwenkbaren Befestigung der Lenkradsäule (3) um eine Schwenkachse (A) angeordnet ist, die Lenkradsäulenverbindungseinheit (5) umfassend Verbindungsmittel (6) für die Lenksäule zum verstellbaren Verbinden der Lenksäule (3) mit dem Rahmen (2) in einer Position in einem Bereich zwischen einer in normaler Fahrtrichtung (D) des Fahrzeugs gesehenen vordersten und hintersten Position (V), die Airbageinheit bestehend aus einem Airbag (8) und einem elektronischen Airbagsteuergerät (9), **dadurch gekennzeichnet, dass** die Lenksäulenverbindungsmittel (6) zum automatischen Positionieren der Lenksäule (3) in die vorderste Position bei einem Frontalaufprall des Fahrzeugs angeordnet sind (V) ohne jegliche andere äußere Auslösung als die kinetische Energie der Masse der Lenksäule (3) und der Aufprallgeschwindigkeit bei Kollision und dass die Airbag-Einheit einen an der Lenksäule (3) seitlich nach unten gerichteten, gewölbten Airbag (8) umfasst.

2. Fahrzeug (V) nach Anspruch 1, **dadurch gekennzeichnet, dass** der Schwerpunkt der Lenksäule (3) oberhalb der Schwenkachse (A) liegt.

3. Fahrzeug (V) nach Anspruch 1 oder 2, **dadurch gekennzeichnet, dass** das Lenksäulenverbindungsmittel (6) einen Klemmmechanismus (6A) für die Lenksäule (3) umfasst.

4. Fahrzeug (V) nach Anspruch 1, 2 oder 3, **dadurch gekennzeichnet, dass** der gewölbte Airbag (8) zum Entfalten in Richtung des Brust- und Kopfbereichs eines Fahrers des Fahrzeugs ausgebildet ist (V).

5. Fahrzeug (V) nach Anspruch 4, **dadurch gekennzeichnet, dass** der gewölbte Airbag (8) mindestens drei Kammern (8A, 8B, 8C), eine erste Kammer (8A), die zum Entfalten zwischen der Lenkradsäule (3) und einem Rand (4A) des Lenkrads (4) eingerichtet ist, eine zweite Kammer (8B), die zum Entfalten über den Rand (4A) des Lenkrads (4) eingerichtet ist, und eine dritte Kammer (8C), die zum Entfalten über das Lenkrad (4) eingerichtet ist, umfasst.

6. Fahrzeug (V) nach Anspruch 5, **dadurch gekennzeichnet, dass** der gewölbte Airbag (8) äußere Bänder (10) zwischen den Kammern (8A, 8B, 8C) umfasst.

7. Fahrzeug (V) nach Anspruch 5 oder 6, **dadurch gekennzeichnet, dass** der gewölbt geformte Airbag (8) eine vierte Kammer (8D) umfasst, wobei die vierte Kammer (8D) so ausgebildet ist, dass sie in Richtung der Knie eines Fahrers entfaltet wird.

8. Fahrzeug (V) nach einem der vorstehenden Ansprüche, **dadurch gekennzeichnet, dass** der gewölbte Airbag (8) ein Volumen von etwa 90 dm³ aufweist.

## Revendications

1. Véhicule (V), en particulier véhicule poids lourd avec une conception à cabine avancée, le véhicule (V) comprenant un ensemble de volant de direction et un ensemble de coussin gonflable de sécurité, l'ensemble de volant de direction comprenant une colonne de volant de direction (3) pour monter un volant de direction (4) au-dessus de la colonne de volant de direction (3) et une unité de raccordement de colonne de volant de direction (5) raccordant la colonne de volant de direction (3) à un cadre (2), dans lequel l'unité de raccordement de colonne de volant de direction (5) est agencée pour monter de manière pivotante la colonne de volant de direction (3) autour d'un axe de pivotement (A), l'unité de raccordement de colonne de volant de direction (5) comprenant des moyens de raccordement de colonne de volant de direction (6) pour raccorder de manière ajustable la colonne de volant de direction (3) au cadre (2) dans une position dans une plage entre une position la plus en avant et une position la plus en arrière, vue dans une direction de conduite normale (D) du véhicule (V), l'ensemble de coussin gonflable de sécurité comprenant un coussin gonflable de sécurité (8) et une unité de commande de coussin gonflable de sécurité électronique (9), **caractérisé en ce que** les moyens de raccordement de colonne de volant de direction (6) sont agencés pour positionner automatiquement la colonne de volant de direction (3) dans la position la plus en avant en cas de collision avant du véhicule (V) sans aucun déclenchement externe autre que l'énergie cinétique de la masse de la colonne de volant de direction (3) et la vitesse d'approche de la collision et **en ce que** l'ensemble de coussin gonflable de sécurité comprend un coussin gonflable de sécurité de forme incurvée (8) monté sur la colonne de volant de direction (3) sur un côté de celle-ci dirigé vers le bas.

2. Véhicule (V) selon la revendication 1, **caractérisé en ce que** le centre de gravité de la colonne de volant de direction (3) est positionné au-dessus de l'axe de pivotement (A).

3. Véhicule (V) selon la revendication 1 ou 2, **caractérisé en ce que** les moyens de raccordement de colonne de volant de direction (6) comprennent un mécanisme de serrage (6A) pour la colonne de volant de direction (3).

4. Véhicule (V) selon la revendication 1, 2 ou 3, **caractérisé en ce que** le coussin gonflable de sécurité de forme incurvée (8) est configuré pour se déployer vers la région du thorax et de la tête d'un conducteur du véhicule (V).

5. Véhicule (V) selon la revendication 4, **caractérisé en ce que** le coussin gonflable de sécurité de forme incurvée (8) comprend au moins trois chambres (8A, 8B, 8C), une première chambre (8A) configurée pour être déployée entre la colonne de volant de direction (3) et une jante (4A) du volant de direction (4), une deuxième chambre (8B) configurée pour être déployée au-dessus de la jante (4A) du volant de direction (4) et une troisième chambre (8C) configurée pour être déployée au-dessus du volant de direction (4).

6. Véhicule (V) selon la revendication 5, **caractérisé en ce que** le coussin gonflable de sécurité de forme incurvée (8) comprend des attaches externes (10) entre les chambres (8A, 8B, 8C).

7. Véhicule (V) selon la revendication 5 ou 6, **caractérisé en ce que** le coussin gonflable de sécurité de forme incurvée (8) comprend une quatrième chambre (8D), la quatrième chambre (8D) étant configurée pour être déployée vers les genoux d'un conducteur.

8. Véhicule (V) selon l'une quelconque des revendications précédentes, **caractérisé en ce que** le coussin gonflable de sécurité de forme incurvée (8) présente un volume d'environ 90 dm³.
